# EUROPEAN PATENT SPECIFICATION

(11) **EP 1 312 835 B1**
(45) Date of publication and mention of the grant of the patent: **27.07.2005**
(21) Application number: 02025342.3
(22) Date of filing: 13.11.2002
(51) Int. Cl.: F16H 57/02, F16C 19/36

(54) **Bearing device used for transmission in automobiles**
Lagervorrichtung für Fahrzeuggetriebe
Dispositif de palier pour transmission de véhicule

(30) Priority: 16.11.2001 JP 2001351219
(43) Date of publication of application: 21.05.2003
(73) Proprietor: KOYO SEIKO CO., LTD., Osaka 542-0081 (JP)
(72) Inventor: Kawaguchi, Toshihiro, c/o Koyo Seiko Co., Ltd., Osaka 542-0081 (JP); Yokota, Kunihiko, c/o Koyo Seiko Co., Ltd., Osaka 542-0081 (JP)
(74) Representative: TER MEER STEINMEISTER & PARTNER GbR

(56) References cited:
- EP-A- 0 756 095
- WO-A-02/073051
- DE-A- 10 049 511
- DE-B- 2 538 230
- US-A- 5 074 680
- PATENT ABSTRACTS OF JAPAN vol. 2000, no. 10, 17 November 2000 (2000-11-17) & JP 2000 192978 A (NTN CORP), 11 July 2000 (2000-07-11)
- PATENT ABSTRACTS OF JAPAN vol. 2000, no. 26, 1 July 2002 (2002-07-01) & JP 2001 241446 A (NSK LTD), 7 September 2001 (2001-09-07)
- PATENT ABSTRACTS OF JAPAN vol. 1997, no. 03, 31 March 1997 (1997-03-31) & JP 8 312760 A (NISSAN DIESEL MOTOR CO LTD), 26 November 1996 (1996-11-26)

## Description

### FIELD OF THE INVENTION

The present invention relates to a bearing device used in a transmission of a vehicle.

### DESCRIPTION OF THE BACKGROUND ART

Hitherto, a transmission makes use of tapered roller bearings for supporting a gear shaft relative to a transmission case. In general, JIS (Japanese Industrial Standard) No. 320 series and No. 302 series are used as the tapered roller bearings.

A transmission case tends to be formed of a light alloy such as an aluminum alloy for weight reduction, while gear shafts are still made of a highly strong iron-series metal. This leads to a larger difference in linear expansion coefficient between a transmission case and a gear shaft, thereby causing the following inconvenience. Namely, in an environment in which the temperature difference of a transmission between the non-operation period and the operation period is -40°C to +120°C, the preload of tapered roller bearings disposed between the transmission case and the gear shaft varies greatly in accordance with this temperature difference. During the high temperature period, the transmission case undergoes heat expansion to let the preload of the tapered roller bearings escape, thereby leading to generation of gear noises such as generation of looseness in the gear shaft. On the other hand, during the low temperature period, the transmission case undergoes heat shrinkage to let the preload of the tapered roller bearings increase, thereby aggravating the operations related to the speed regulating operation.

In order to solve this problem, a technique is proposed by which an elastic core that absorbs heat expansion difference between the transmission case and the shaft is inserted between the transmission case and the bearings, as disclosed in Japanese Patent Laid-open Publication No. 2000-192978, which shows all the features of the preamble of independent claim 1. This technical case, however, leads to increase in the number of components as well as increase in the number of assembling steps, thereby raising the production costs.

Also, a technique is proposed by which the case hole and the outer ring outside peripheral surfaces of the tapered roller bearings are tapered to absorb the heat expansion difference as descried above so that the heat expansion difference may be absorbed by an action of a wedge becoming strong or weak in accordance with the heat shrinkage of the case, as disclosed in Japanese Patent Laid-open Publication No. H8 (1996) -312760. This technical case, however, necessitates a special processing to be performed on the case and the outer rings, thereby raising the production costs.

### SUMMARY OF THE INVENTION

A bearing device of a transmission according to the present invention is constructed in such a manner that a gear shaft is supported relative to a transmission case via tapered roller bearings, wherein the transmission case is formed of a material having a larger linear expansion coefficient than the gear shaft, and a contact angle of tapered rollers relative to outer rings of the tapered roller bearings is set to be from not less than 8° to not more than 13.5°.

Preferably, an initial preload imparted to the tapered roller bearings is set to satisfy a condition such that an axial internal clearance is 0.1 mm or less at an ordinary temperature.

Preferably, the transmission case is formed of a light alloy, and the gear shaft and inner and outer rings are each formed of an iron-series metal.

In the present invention, the structure of tapered roller bearings, which are already existing constituent elements, is devised without the use of additional components as in the prior art. In the present invention also, the radial internal clearance between the outer rings and the tapered rollers in the tapered roller bearings varies due to heat expansion difference between the transmission case and the gear shaft caused by the change of the temperature of the transmission. However, in the present invention, since the contact angle of the tapered rollers relative to the outer rings of the tapered roller bearings is set to be small, the variation in the radial internal clearance is restrained to be small. This alleviates the variation in the preload of the tapered roller bearings.

If the initial preload imparted to the tapered roller bearings is set in an ordinary temperature range (for example, 20°C), the inconvenience during the low temperature period and the inconvenience during the high temperature period will be lessened with a good balance.

### BRIEF DESCRIPTION OF THE DRAWINGS

Fig. 1 is a schematic structural view illustrating a transmission of an FR (front engine·rear drive) -type automobile in which a bearing device of the present invention is used;
Fig. 2 is a schematic structural view illustrating a transmission of an FF(front engine·front drive)-type automobile in which a bearing device of the present invention is used;
Fig. 3 is an enlarged view illustrating an input part A of the input gear shaft of Figs. 1 and 2;
Fig. 4 is a view describing the change of the wedge function relative to the magnitude of the contact angle of a tapered roller bearing; and
Fig. 5 is a view showing a relationship between the temperature change of a tapered roller bearing and the change in radial internal clearance.

### DESCRIPTION OF THE PREFERRED EMBODIMENTS

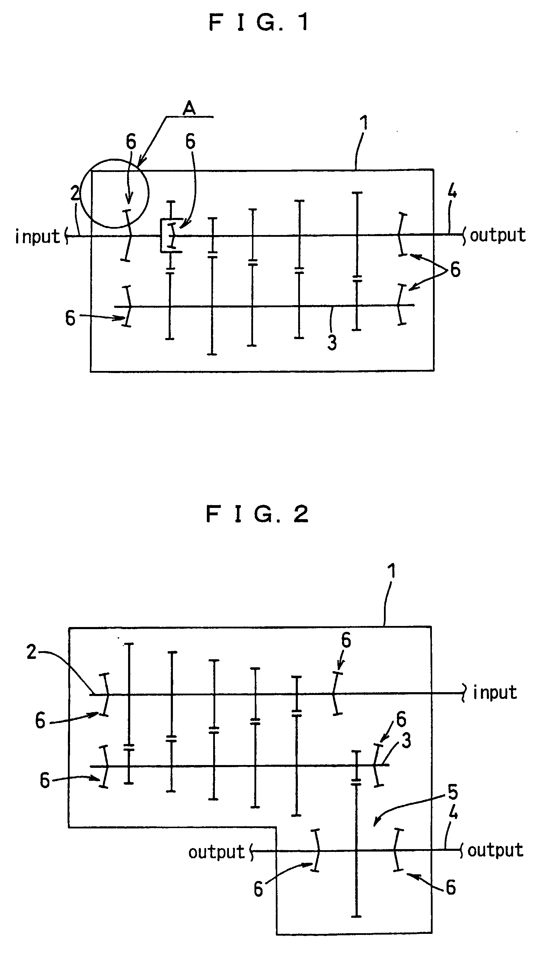

A bearing device according to an embodiment of the present invention will be described with reference to Figs. 1 to 5 showing a transmission case 1, an input gear shaft 2, a counter gear shaft 3, an output gear shaft 4, a differential mechanism 5, and tapered roller bearings 6. Various gears from low speed to high speed (reference numbers omitted) are mounted to each of the gear shafts 2, 3, 4.

The transmission case 1 is formed, for example, of a light alloy such as an aluminum alloy, and the gear shafts 2, 3, 4 are each formed, for example, of an iron-series metal such as chromium steel JIS SCr. The linear expansion coefficient of transmission case 1 is larger than the linear expansion coefficients of gear shafts 2, 3, 4 and inner and outer rings 10, 11.

Tapered roller bearings 6 each include an inner ring 10, an outer ring 11, a plurality of tapered rollers 12, and a cage 13. Among these, at least the inner and outer rings 10, 11 and tapered rollers 12 are each formed, for example, of an iron-series metal such as bearing steel, and each have a linear expansion coefficient approximately equal to, for example, that of each of the gear shafts 2, 3, 4.

Each tapered roller bearing 6 is incorporated approximately in the same manner. Here, description will be given by raising, as a representative example, the case of a tapered roller bearing 6 which is disposed on the input side of input gear shaft 2.

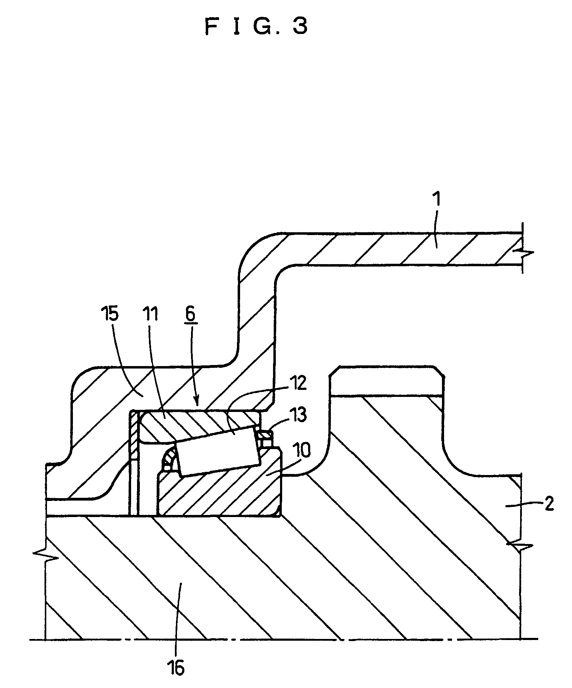

Namely, as illustrated in Fig. 3, tapered roller bearing 6 is inserted between a small-diameter cylindrical section 15 disposed on one end of transmission case 1 and a small-diameter axial section 16 disposed on the input side of input gear shaft 2. Tapered roller bearings 6 respectively disposed on one end of input gear shaft 2 and on both ends of counter gear shaft 3 face each other although they are distant from each other in the axial direction.

The contact angle α of tapered roller 12 relative to outer ring 11 of tapered roller bearing 6 is set to be from not less than 8° to not more than 13.5°.

Outer ring 11 is set to have a smaller thickness than a general one, and the central circle diameter P.C.D of tapered roller 12 is set to be as large as possible. This enhances the anti-loading property of tapered roller bearing 6. An initial preload is imparted to tapered roller bearing 6 so that the axial internal clearance will be 0.1 mm or less at an ordinary temperature (for example, 20°C) .

As described above, the contact angle α of tapered roller 12 relative to outer ring 11 of tapered roller bearing 6 is set to be smaller than that of a general one. For this reason, even if the radial internal clearance between outer ring 11 and tapered roller 12 changes due to the heat expansion difference between transmission case 1 and each of the gear shafts 2, 3, 4 accompanying the temperature change of tapered roller bearing 6, the variation of the radial internal clearance is restrained to be small. This alleviates the variation in the preload of tapered roller bearing 6.

The reason will be described in detail. In the case of tapered roller bearing 6 having the above-described structure, transmission case 1 and gear shafts 2, 3, 4 each expand or shrink in the axial direction in accordance with the change of the temperature. However, since the linear expansion coefficient of transmission case 1 is larger than that of each gear shaft 2, 3, 4, the axial load acting on outer ring 11 of tapered roller bearing 6 changes when transmission case 1 expands or shrinks. For example, when transmission case 1 shrinks by heat shrinkage, the axial load on outer ring 11 increases, whereby the pressing pressure on tapered roller 12 on the inner side in the axial direction increases due to the wedge's biting action, thereby to decrease the radial internal clearance. On the other hand, when transmission case 1 expands by heat expansion, the axial load on outer ring 11 decreases, whereby the pressing pressure on tapered roller 12 on the inner side in the axial direction decreases due to the wedge's escaping action, thereby to increase the radial internal clearance.

In such increase and decrease of the radial internal clearance, if the contact angle α is set to be small, the wedge' s biting action during a low temperature period and the wedge's escaping action during a high temperature period are alleviated. As a result of this, the variation in the radial internal clearance is restrained to be small even if the temperature rises or falls.

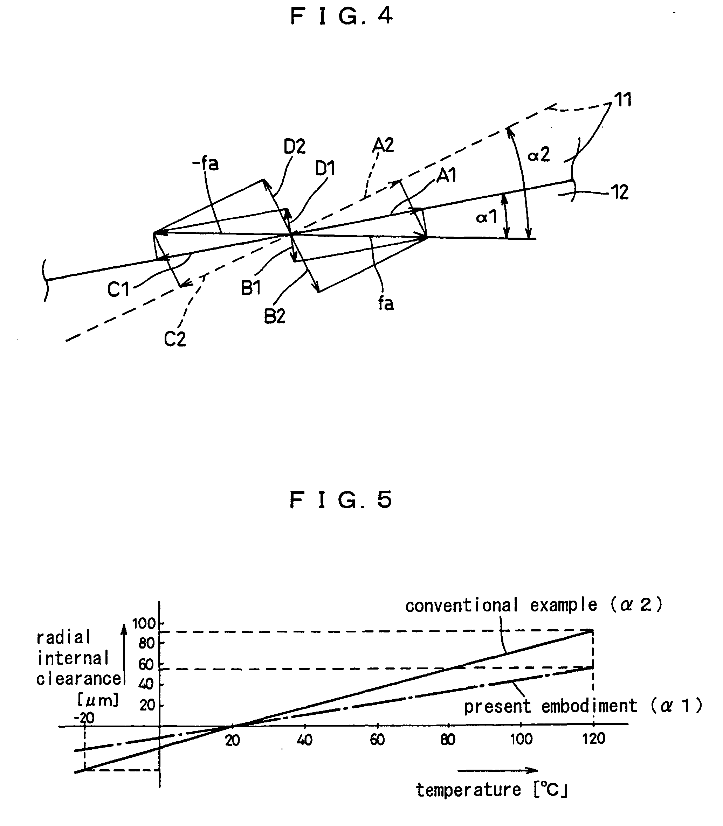

Specifically, as will be described with reference to Fig. 4, when loads fa, -fa in the axial direction act on outer ring 11, the loads are decomposed into stresses A1, A2, C1, C2 in the direction along the contact surface between outer ring 11 and tapered roller 12 and into stresses B1, B2, D1, D2 in the direction along the perpendicular line to the contact surface, in accordance with the contact angle. In this case, the stresses B1, D1 when the contact angle assumes a small value of "α1" as shown in a solid line are smaller than the stresses B2, D2 when the contact angle assumes a large value of "α2" as shown in a broken line. Thus, when the contact angle is set to be small, the wedge's biting action and escaping action are alleviated, so that the preload variation of tapered roller bearing 6 is restrained.

The amount of variation in the radial internal clearance due to temperature change has been confirmed by an experiment. In this experiment, two tapered roller bearings 6 were prepared as samples, one according to the present embodiment and one according the conventional example.

The tapered roller bearings prepared as samples in both of the present embodiment and the conventional example make use of JIS No. 32007JR. In the present embodiment, the contact angle α between outer ring 11 and tapered roller 12 is set to be 10°, whereas in the conventional example, the contact angle α is set to be, for example, 14° (corresponding to current products).

In the experiment, tapered roller bearing 6 serving as a sample is incorporated into a device in a state approximated to the actual state of use, in which the case corresponding to transmission case 1 is formed of an aluminum alloy, and the rotative shaft corresponding to each gear shaft 2, 3, 4 is formed of chromium steel JIS SCr. The linear expansion coefficient of aluminum alloy is about 20.0 [10⁻⁶/deg], while the linear expansion coefficient of chromium steel JIS SCr is about 11.0 [10⁻⁶/deg].

The initial preload imparted to tapered roller bearings 6 serving as samples is set to satisfy a condition such that the axial internal clearance is 0.1 mm at an ordinary temperature (for example, 20°C). The lubricating oil put to use is 75W-90. The operation condition is from -20°C to 120°C.

As a result of the experiment, the degree of heat expansion and heat shrinkage of transmission case 1 accompanying the temperature rise and fall from an ordinary temperature (for example, 20°C) is the same in both of the conventional example and the present embodiment, as shown in Fig. 5. However, the variation in the radial internal clearance accompanying the temperature rise and fall is about 0.5ΔT (ΔT: temperature change) in the present embodiment, while the variation was about 0.9ΔT in the conventional example, whereby the variation in the radial internal clearance was reduced to be about half in the present embodiment as compared with the conventional example.

In other words, the ratio of increase in the radial internal clearance during the high temperature period and the ratio of decrease in the radial internal clearance during the low temperature period are both restrained, whereby both the phenomenon of the preload escaping during the high temperature period and the phenomenon of the preload becoming excessive during the low temperature period can be alleviated. Therefore, the looseness in the supporting section of each gear shaft 2, 3, 4 of the transmission during the high temperature period is restrained to reduce the generation of gear noises, and the operation related to the operation in the transmission during the low temperature period is maintained to be smooth. As a result of this, the quality of the transmission as a product is greatly improved.

In the meantime, the amount of heat shrinkage of transmission case 1 is generally large when input gear shaft 2 shown in Figs. 1 and 2 is long and the distance between the centers of tapered roller bearings 6, 6 disposed on both ends thereof is large. For this reason, the use of tapered roller bearing 6 having the above-described construction will be particularly effective in a case like this.

Here, in the above-described embodiment, an example has been raised in which the outer ring 11 of tapered roller bearing 6 has a small thickness; however, the size of each section in tapered roller bearing 6 can be changed in various ways. The initial preload imparted to tapered roller bearing 6 is set at an arbitrary value by considering the balance between the degree of restraining the inconvenience during the low temperature period and the degree of restraining the inconvenience during the high temperature period.

As will be clearly understood from the above description, in the present invention, the variation in the radial internal clearance between the outer ring of the tapered roller bearing and the tapered roller due to the heat expansion difference between the transmission case and the gear shaft is restrained to be small by devising the structure of the tapered roller bearing, which is an already existing constituent element, without the use of an additional component as in the conventional example. Therefore, in the present invention, while avoiding a useless cost increase, the looseness of the gear shaft during the high temperature period can be restrained, and in addition, the operability of the gear shaft during the low temperature period can be maintained to be smooth, thereby greatly contributing to an improvement in the quality of the transmission as a product.

In particular, if a condition of the initial preload imparted to the tapered roller bearing is specified, the inconvenience during the low temperature period and the inconvenience during the high temperature period can be lessened with a good balance, which is preferable from a practical point of view.

## Claims

1. A bearing device in which a gear shaft (2) is supported relative to a transmission case (1) via tapered roller bearings (6), wherein said transmission case is formed of a material having a larger linear expansion coefficient than said gear shaft, **characterized in that** a contact angle of tapered rollers (12) relative to outer rings (11) of said tapered roller bearings is set to be from not less than 8° to not more than 13.5°.

2. The bearing device according to claim 1, wherein both ends of the gear shaft are supported relative to said transmission case via said tapered roller bearings, and said tapered roller bearings are disposed to be adjacent to each other and to face each other in an axial direction.

3. The bearing device according to claim 1 or 2, wherein an initial preload imparted to said tapered roller bearings is set to satisfy a condition such that an axial internal clearance is 0.1 mm or less at an ordinary temperature.

4. The bearing device according to any one of claims 1 to 3, wherein said transmission case is formed of a light alloy, and said gear shaft and inner and outer rings of said tapered roller bearings are each formed of an iron-series metal.

## Patentansprüche

1. Lagervorrichtung, in der eine Getriebewelle (2) in Bezug auf ein Getriebegehäuse (1) durch Kegelrollenlager (6) gelagert ist, welches Getriebegehäuse aus einem Material mit einem größeren Längsausdehnungskoeffizienten besteht als das Getriebegehäuse, **dadurch gekennzeichnet, dass** ein Kontaktwinkel der Kegelrollen (12) in Bezug auf äußere Ringe (11) der Kegelrollenlager so festgelegt ist, dass er nicht kleiner als 8° und nicht größer als 13,5° ist.

2. Lagervorrichtung gemäß Anspruch 1, bei welcher beide Enden der Getriebewelle in Bezug auf das Getriebegehäuse durch Kegelrollenlager gelagert sind, welche Kegelrollenlager einander benachbart und einander in der axialen Richtung zugewandt angeordnet sind.

3. Lagervorrichtung gemäß Anspruch 1 oder 2, bei welcher eine auf die Kegelrollenlager wirkende anfängliche Vorlast so festgelegt ist, dass ein axialer innerer Zwischenraum 0, 1 mm oder weniger bei üblicher Temperatur beträgt.

4. Lagervorrichtung gemäß einem der Ansprüche 1 bis 3, bei welcher das Getriebegehäuse aus einer leichten Legierung hergestellt ist und die Getriebewelle und die inneren und äußeren Ringe der Kegelrollenlager jeweils aus einem Metall der Eisen-Gruppe bestehen.

## Revendications

1. Dispositif formant palier dans lequel un arbre de transmission (2) est supporté par rapport à un carter de boîte de vitesses (1) par l'intermédiaire de paliers à rouleaux coniques (6), ledit carter de boîte de vitesses étant formé d'un matériau ayant un coefficient de dilatation linéaire supérieur à celui dudit arbre de transmission, **caractérisé en ce que** l'angle de contact des rouleaux coniques (12) par rapport à des bagues extérieures (11) desdits paliers à rouleaux coniques est défini pour être dans une plage de 8 ° au moins à 13,5 ° au plus.

2. Dispositif formant palier selon la revendication 1, dans lequel les deux extrémités de l'arbre de transmission sont supportées par rapport audit carter de boîte de vitesses par l'intermédiaire desdits paliers à rouleaux coniques, lesdits paliers à rouleaux coniques étant disposés pour être adjacents les uns aux autres et se faire face dans une direction axiale.

3. Dispositif formant palier selon la revendication 1 ou 2, dans lequel une précontrainte initiale impartie auxdits paliers à rouleaux coniques est définie pour satisfaire une condition telle qu'un jeu interne axial est de 0,1 mm ou moins à température normale.

4. Dispositif formant palier selon l'une quelconque des revendications 1 à 3, dans lequel ledit carter de boîte de vitesses est formé d'un alliage léger, ledit arbre de transmission et des bagues intérieures et extérieures desdits paliers à rouleaux coniques étant respectivement formés d'un métal de la série du fer.
